Europäisches Patentamt

European Patent Office

Office européen des brevets

(11) Publication number: **0 621 294 A2**

# EUROPEAN PATENT APPLICATION

(21) Application number: **94106232.5**

(22) Date of filing: **21.04.94**

(51) Int. Cl.5: **C08G 18/48**, //(C08G18/48, 101:00)

(30) Priority: **21.04.93 JP 116636/93**
**07.03.94 JP 36038/94**

(43) Date of publication of application:
**26.10.94 Bulletin 94/43**

(84) Designated Contracting States:
**BE DE GB**

(71) Applicant: **BRIDGESTONE CORPORATION**
**10-1, Kyobashi 1-Chome**
**Chuo-Ku**
**Tokyo 104 (JP)**

(72) Inventor: **Kinoshita, Hideya**
**150-7, Kashio-cho,**
**Totsuka-ku**
**Yokohama-shi, Kanagawa (JP)**
Inventor: **Ohashi, Takashi, Block 15B Level 23**
**Unit 5 Everett**
**Tower Mont' Kiara Pines Jalan 1/70C**
**of Jalan Bukit Kiara 50480, Kuala Lumpur**
**(MY)**

(74) Representative: **Hansen, Bernd, Dr.**
**Dipl.-Chem. et al**
**Hoffmann, Eitle & Partner,**
**Patentanwälte,**
**Arabellastrasse 4**
**D-81925 München (DE)**

(54) **Process for producing a flexible polyurethane foam having high air permeability.**

(57) A process for producing a flexible polyurethane foam comprises the step of using a polyether polyol which contains 50 weight % to less than 100 weight % of a single diol in the polyol component or 50 weight % or more of a plurality of single diols in the polyol component, a polyisocyanate, a catalyst and a blowing agent. Flexible polyurethane foam having excellent air permeability can be produced conveniently and economically according to the process.

EP 0 621 294 A2

Rank Xerox (UK) Business Services
(3.10/3.09/3.3.4)

## BACKGROUND OF THE INVENTION

### 1. Field of the Invention

The present invention relates to a process for producing a flexible polyurethane foam, more particularly, to a process for producing a flexible polyurethane foam having high air permeability used in applications requiring high air permeability, such as various kinds of filter, various kinds of roller for office automation instruments, cleaners, ear pads for headphones, cosmetic pads, masks, media for waste disposal, ceramics having three dimensional network structures or intermediate materials for metallic structures.

### 2. Description of the Related Art

In general processes for producing a flexible polyurethane foams, a trifunctional polyol is used as a polyol component. Flexible polyurethane foam is made into a three dimensionally crosslinked resin (cured foam) by competitive reactions between the resin forming reaction and the blowing reaction. Cell membranes are broken during the reactions making the foam into the three dimensionally crosslinked resin (the curing reaction) to form an open cell structure and a good foam is obtained without causing the contraction phenomenon. However, a considerable part of the cell membrane is generally left unbroken. Therefore, various methods have been developed for producing flexible polyurethane foam which has excellent air permeability and in which no cell membranes remain.

The following are generally known examples of such methods.

(1) A method of treating flexible polyurethane foam with heat, alkali or the like after it is prepared (Japanese Patent Publication No. 1966-752, British Patent No. 918495, Canadian Patent No. 620248).

(2) A method of mixing a small amount of silica sol in the polyol component (Japanese Patent Application Laid-Open No. 1985-163912).

(3) A method of adding small amounts of a hydrophilic organosilicon emulsifying surfactant and a hydrophobic antifoaming organosilicon compound (Japanese Patent Application Laid-Open No. 1972-32095).

(4) A method of using a polyester polyol having hydroxyl value of 40 to 70 as polyol and poly-(oxypropylene-oxyethylene) ether polyol containing 50 weight % or more of the ethylene oxide component in an amount in the range of 20 to 40 weight parts per 100 weight parts of said polyester polyol (Japanese Patent Application Laid-Open Nos. 1980-27315 and 1980-27316).

However, the method (1) has drawbacks in that, because a foam must be treated after it is prepared, the process is complicated and additional costs are required and in that the resin tends to be fractured after the treatment to cause a problem on durability of the foam even though the cell membrane can be eliminated completely. The methods (2) to (4) have a drawback that it is difficult to obtain a polyurethane foam having a high level of air permeability with good stability even though no after-treatment of the foam is required.

## SUMMARY OF THE INVENTION

It is an object of the present invention to provide a process for producing a polyurethane foam containing almost no cell membrane and having high air permeability conveniently with good stability through the processes of compounding and blowing without an additional process for removing cell membrane after preparation of the foam.

The object described above was achieved by the process of the present invention, which is a process for producing a flexible polyurethane foam by using a polyether polyol which contains 50 weight % to less than 100 weight % of a single diol in the polyol component or 50 weight % or more of a plurality of single diols in the polyol component, a polyisocyanate, a catalyst and a blowing agent.

In an embodiment, of the single diols contained in the polyether polyol, the two single diols having the largest contents are a total amount of 50 weight % or more of the amount of the polyol component.

In another embodiment, the process of the present invention comprises using a polyether polyol containing a diol having a total average molecular weight of 1000 to 3000, and preferably using a polyether polyol containing a plurality of single diols having a total average molecular weight of 1000 to 3000. In still another embodiment, the process comprises using a polyether polyol containing a plurality of single diols having an average molecular weight difference of 800 to 3600, and preferably, of the plurality of single diols contained therein, the two single polyols of the largest contents have an average molecular weight difference of 800 to 3600.

2

In still another embodiment, the process of the present invention comprises using a polyether polyol in which, of the plurality of single diols contained therein, the two single polyols of the largest contents have a total average molecular weight of 1000 to 3000 and an average molecular weight difference of 800 to 3600.

In still another embodiment, the process of the present invention comprises using a polyether polyol containing less than 15 weight % of a polyol having a molecular weight of less than 300.

The term "single diol" herein means in general a single diol or a group of two or more diols having an average molecular weight difference of 400 or less.

The term "total average molecular weight" means an average molecular weight for a single diol and an average molecular weight obtained from the sum of molecular weights for two or more diols.

The term "average molecular weight difference" means the difference between average molecular weights of the diols in consideration and the largest difference between average molecular weights of the diols in consideration particularly when there are many combinations of diols.

According to the process of production, a flexible polyurethane foam having excellent air permeability, for example, 200 cc/cm$^2$/sec or more, particularly 300 cc/cm$^2$/sec or more, can be produced conveniently and economically.

DETAILED DESCRIPTION OF THE INVENTION

The polyether polyol used in the process of the present invention contains 50 weight % to less than 100 weight % of a single diol in the polyol component or 50 weight % or more of a plurality of single diols in the polymer component, preferably 50 weight % or more in the polyol component, and more preferably 70 weight % or more in the polyol component. When the content is less than 50 weight % in the polyol component, a polyurethane foam having sufficient air permeability cannot be obtained even when one or more single diols are used. When a single diol is used, a polyurethane foam cannot be formed by using said diol alone as the polyol component or, in other words, in the condition that content of the single diol in the polyol component is at the maximum value of 100 weight %. When two or more said diols are used, a foam having excellent air permeability can be formed even in the condition that the content of said diols in the polyol component is 100 weight %. For example, when kinds of said diol used are kept the same, amount of the air permeation may be increased depending on the contents of the diols in the polyol component. Therefore, in order to obtain a polyurethane foam having better air permeability, it is preferred that two or more single diols are used and that the total content of the diols in the polyol component is 70 weight % or more. It is more preferable that, when a single diol having the largest content and another single diol having a content, which is equal to or which is the next largest content with respect to the above single diol, are selected as the single diols in consideration, or in other words, when two single diols of the largest contents are selected, the total of the contents of these two diols in the polyol component is 50 weight % or more. The term "contents" refers to the amount of a single diol included in the polyether polyol.

Said single diol includes a single diol and a plurality of diols having a molecular weight difference of 400 or less. A single diol is more preferable.

Total average molecular weight of one diol, preferably two or more diols contained in the polyether polyol used in the present invention is 1000 to 3000, preferably 1000 to 2000 and more preferably 1300 to 1700. When this value is less than 1000 or more than 3000, a polyurethane foam having sufficient air permeability cannot be obtained or foam may not be formed. For exhibiting higher effect, these values may be applied to the total average molecular weight of a single diol or two or more single diols selected from diols contained in the polyether polyol. When, for example, two single diols are mixed, the total average molecular weight of the single diols can be obtained as following:

$$\text{Total average molecular weight} = \frac{\Sigma \left\{ A \times Mw(A) + B \times Mw(B) \right\}}{\Sigma \left( A + B \right)}$$

A:  mixed amount of diol A
B:  mixed amount of diol B
Mw(A): average molecular weight of diol A
Mw(B): average molecular weight of diol B

As for the average molecular weight difference of single diols in the present invention, the difference between the maximum value and the minimum value in the average molecular weights of the single diols

3

contained in the polyether polyol can be 800 to 3600, preferably 800 to 2000, and more preferably 800 to 1200. It is most preferred that the average molecular weight difference of two single diols of the largest contents is kept in the ranges described above. When the single diols are each composed of a plurality of diols having molecular weight difference of 400 or less, an average molecular weight of a single diol is obtained from the combination of diols giving the largest difference in the molecular weight in the single diol and the average molecular weight difference is obtained from the average molecular weights of single diols thus obtained. When the average molecular weight difference is out of the range described above, the polyurethane foam of the object of the present invention cannot be provided. The average molecular weight difference can be obtained, for example, from the following equation:

Average molecular weight difference = Mw(max) - Mw(min)

> Mw(max): average molecular weight of the largest diol
> Mw(min): average molecular weight of the smallest diol

The polyether polyol of the present invention includes (1) a polyether polyol of the type obtained, for example, by addition of propylene oxide alone to diethylene glycol, (2) a polyether polyol of the type obtained, for example, by block or random addition of propylene oxide and ethylene oxide to diethylene glycol, and (3) a polyether polyol of the type obtained by grafting, for example, acrylonitrile or styrene to a polyether polyol of the type (1) or (2). Kind of the polyether polyol is not particularly limited but a polyether polyol of the type (1) is preferred for better exhibiting the effect of the present invention.

Examples of initiator used for producing the polyether polyol in the present invention are polyhydric alcohols, polyhydric phenols, mono- or polyamines and the like, preferably polyhydric alcohols and polyhydric phenols, and more preferably polyhydric alcohols. Examples of the polyhydric alcohol are ethylene glycol, diethylene glycol, triethylene glycol, propylene glycol, 1,3-butanediol, 1,4-butanediol and the like. Diethylene glycol is preferable among them.

Polyol components other than the diol may be contained in the polyether polyol component of the present invention. Examples of the other polyol component are trifunctional polyols generally used in production of flexible polyurethane foams, such as addition products of an alkylene oxide like propylene oxide to a glycerol base or the like and random or block addition products of two kinds of alkylene oxides like propylene oxide and ethylene oxide to a glycerol base or the like, polyfunctional polyols generally used in production of flexible polyurethane foams, such as polyether polyols obtained by addition of compounds described above to sucrose base, and the like other polyols. All these polyols may be used.

The polyether polyol of the present invention contains less than 15 weight % of polyols having molecular weight of 300 or less. When the content is 15 weight % or more, unfavorable problems, such as failure to form polyurethane foam, may possibly occur.

As the isocyanate component, tolylene diisocyanate, 4,4'-diphenylmethane diisocyanate, polymethylene polyphenyl isocyanate or the like can be used singly or mixture of two or more kinds. Tolylene diisocyanate is preferable among them.

Kind and amount of compounds used as the catalyst and the blowing agent are not particularly limited but conventional compounds can be used in conventional amounts. For example, amine catalysts, such as triethylenediamine, tetramethylenehexadiamine, dimethylcyclohexylamine and the like, or organotin catalysts, such as stannous octoate, dibutyltin dilaurate and the like, can be used as the catalyst. Methylene chloride, a chlorofluorocarbon ($CF_3CHCl_2$ or $CFCl_2CH_3$) or the like can be used as the blowing agent.

In the flexible polyurethane foam of the present invention, other additives, such as a flame retardant, an antioxidant, an ultraviolet light absorbent, foam stabilizer and the like, can be suitably added.

As the foam stabilizer, various kinds of siloxane, polyalkylene oxide block copolymers or the like can be used.

The process for producing a flexible polyurethane foam of the present invention can be conducted according to a conventional process of production of open cell polyurethane foam. For example, prepolymer process, one-shot process, partial prepolymer process or the like can be adopted.

[Example]

The invention is described with reference to examples in the following.

Polyurethane foams were prepared according to the formulations shown in Tables 1 and 2 by the method shown in the following.

A polyol was measured and charged into a 1 liter paper cup. Water, an amine catalyst and a foam stabilizer were measured, added to the paper cup and mixed by stirring with a stirrer. Then, various kinds of additives and a tin catalyst were measured and mixed with the mixture prepared above with a stirrer to prepare a polyol component.

An isocyanate which had been measured into another vessel in advance was added quickly to the paper cup containing the mixture of the polyol component and, after stirring, the mixture was poured into a rectangular box of 250 mm square for foaming. After the foaming, the foam was left standing for 24 hours at room temperature. Air permeability of the foam obtained was measured using Furasir type tester (according to Japanese Industrial Standard L-1004). (Unit of air permeability, cc/cm$^2$/sec)

In Comparative Example 17, air permeability of a polyurethane foam treated by burning after preparation of the foam according to the method disclosed in Japanese Patent Publication No. 1966-752 is shown.

Table 1 (Part 1)

| Example | 1 | 2 | 3 | 4 | 5 | 6 | 7 | 8 | 9 |
|---|---|---|---|---|---|---|---|---|---|
| Comparative Example | – | – | – | – | – | – | – | – | – |
| Diol 1 (#200)[*1] | – | – | – | – | – | – | – | – | – |
| Diol 2 (#400)[*2] | – | – | – | – | – | 20 | 20 | – | – |
| Diol 3 (#1000)[*3] | 60 | 80 | 25 | 30 | 40 | – | – | 30 | 50 |
| Diol 4 (#2000)[*4] | – | – | 25 | 30 | 40 | 80 | – | 70 | 50 |
| Diol 5 (#3000)[*5] | – | – | – | – | – | – | 80 | – | – |
| Diol 6 (#4000)[*6] | – | – | – | – | – | – | – | – | – |
| Diol 7 (#1000)[*7] | – | – | – | – | – | – | – | – | – |
| Diol 8 (#1000)[*8] | – | – | – | – | – | – | – | – | – |
| Diol 9 (#5000)[*9] | – | – | – | – | – | – | – | – | – |
| Triol (#3000)[*12] | 40 | 20 | 50 | 40 | 20 | – | – | – | – |
| total average molecular weight of diol | 1000 | 1000 | 1500 | 1500 | 2000 | 1680 | 2480 | 1700 | 1500 |
| maximum of average molecular weight difference of diol | – | – | 1000 | 1000 | 1000 | 1600 | 2600 | 1000 | 1000 |
| TDI (T-80) index[*13] | 105 | 105 | 105 | 105 | 105 | 105 | 105 | 105 | 105 |
| water | 4.2 | 4.2 | 4.2 | 4.2 | 4.2 | 4.2 | 4.2 | 4.2 | 4.2 |
| amine catalyst[*14] | 0.1 | 0.1 | 0.1 | 0.1 | 0.1 | 0.1 | 0.1 | 0.1 | 0.1 |
| foam stabilizer[*15] | 1.0 | 1.0 | 1.0 | 1.0 | 1.0 | 1.0 | 1.0 | 1.0 | 1.0 |
| tin catalyst[*16] | 0.15 | 0.15 | 0.2 | 0.2 | 0.2 | 0.2 | 0.2 | 0.2 | 0.2 |
| air permeation ($cc/cm^2/sec$) | 236 | 201 | 210 | 247 | 301 | 322 | 237 | 281 | 333 |
| number of cell (number/inch) | 35 | 35 | 35 | 35 | 35 | 35 | 35 | 35 | 35 |

(Table 1 continued)

Table 1 (Part 2)

| Example | 10 | 11 | 12 | 13 | 14 | 15 | 16 | 17 | 18 |
|---|---|---|---|---|---|---|---|---|---|
| Comparative Example | – | – | – | – | – | – | – | – | – |
| Diol 1 (#200)[*1] | – | – | – | – | – | – | – | – | – |
| Diol 2 (#400)[*2] | – | – | – | – | – | – | – | 20 | – |
| Diol 3 (#1000)[*3] | 70 | 50 | 50 | – | – | – | – | 40 | 20 |
| Diol 4 (#2000)[*4] | 30 | – | – | 50 | 50 | 50 | 50 | 40 | 50 |
| Diol 5 (#3000)[*5] | – | 50 | – | 50 | – | – | – | – | 30 |
| Diol 6 (#4000)[*6] | – | – | 50 | – | 50 | – | – | – | – |
| Diol 7 (#1000)[*7] | – | – | – | – | – | 50 | – | – | – |
| Diol 8 (#1000)[*8] | – | – | – | – | – | – | 50 | – | – |
| Diol 9 (#5000)[*9] | – | – | – | – | – | – | – | – | – |
| Triol (#3000)[*12] | – | – | – | – | – | – | – | – | – |
| total average molecular weight of diol | 1300 | 2000 | 2500 | 2500 | 3000 | 1280 | 2100 | 1500 | 1500 |
| maximum of average molecular weight difference of diol | 1000 | 2000 | 3000 | 1000 | 2000 | 1600 | 2000 | 1000 | 1000 |
| TDI (T-80) index[*13] | 105 | 105 | 105 | 105 | 105 | 105 | 105 | 105 | 105 |
| water | 4.2 | 4.2 | 4.2 | 4.2 | 4.2 | 4.2 | 4.2 | 4.2 | 4.2 |
| amine catalyst[*14] | 0.1 | 0.1 | 0.1 | 0.1 | 0.1 | 0.1 | 0.1 | 0.1 | 0.1 |
| foam stabilizer[*15] | 1.0 | 1.0 | 1.0 | 1.0 | 1.0 | 1.0 | 1.0 | 1.0 | 1.0 |
| tin catalyst[*16] | 0.2 | 0.35 | 0.3 | 0.6 | 0.2 | 0.2 | 0.15 | 0.15 | 0.15 |
| air permeation (cc/cm$^2$/sec) | 283 | 238 | 220 | 210 | 202 | 245 | 213 | 249 | 300 |
| number of cell (number/inch) | 35 | 35 | 35 | 35 | 35 | 35 | 35 | 35 | 35 |

(Table 1 continued)

Table 1 (Part 3)

| Example | | | | | | | | | |
| Comparative Example | 1 | 2 | 3 | 4 | 5 | 6 | 7 | 8 | 9 |
|---|---|---|---|---|---|---|---|---|---|
| Diol 1 (#200)[*1] | – | – | – | – | – | – | 20 | – | – |
| Diol 2 (#400)[*2] | – | – | – | – | – | – | – | 20 | – |
| Diol 3 (#1000)[*3] | – | 20 | 40 | 100 | – | 20 | – | – | – |
| Diol 4 (#2000)[*4] | – | – | – | – | 100 | 20 | – | – | – |
| Diol 5 (#3000)[*5] | – | – | – | – | – | – | – | – | 50 |
| Diol 6 (#4000)[*6] | – | – | – | – | – | – | 80 | 80 | 50 |
| Diol 7 (#1000)[*7] | – | – | – | – | – | – | – | – | – |
| Diol 8 (#1000)[*8] | – | – | – | – | – | – | – | – | – |
| Diol 9 (#5000)[*9] | – | – | – | – | – | – | – | – | – |
| Triol (#3000)[*12] | 100 | 80 | 60 | – | – | 60 | – | – | – |
| total average molecular weight of diol | – | 1000 | 1000 | 1000 | 2000 | 1500 | 3240 | 3280 | 3500 |
| maximum of average molecular weight difference of diol | – | – | – | – | – | 1000 | 3800 | 3600 | 1000 |
| TDI (T-80) index[*13] | 105 | 105 | 105 | 105 | 105 | 105 | 105 | 105 | 105 |
| water | 4.2 | 4.2 | 4.2 | 4.2 | 4.2 | 4.2 | 4.2 | 4.2 | 4.2 |
| amine catalyst[*14] | 0.1 | 0.1 | 0.1 | 0.1 | 0.1 | 0.1 | 0.1 | 0.1 | 0.1 |
| foam stabilizer[*15] | 1.0 | 1.0 | 1.0 | 1.0 | 1.0 | 1.0 | 1.0 | 1.0 | 1.0 |
| tin catalyst[*16] | 0.2 | 0.2 | 0.2 | 0.2 | 0.2 | 0.2 | 0.8 | 0.3 | 0.8 |
| air permeation[*17) ($cc/cm^2/sec$) | 70 | 125 | 166 | – | – | 152 | – | 180 | 69 |
| number of cell[*17) (number/inch) | 35 | 35 | 35 | – | – | 35 | – | 35 | 35 |

(Table 1 continued)

Table 1 (Part 4)

| Example | – | – | – | – | – | – | – | – |
|---|---|---|---|---|---|---|---|---|
| Comparative Example | 10 | 11 | 12 | 13 | 14 | 15 | 16 | 17 |
| Diol 1 (#200)[*1] | – | – | – | – | 20 | 20 | 20 | a heat- |
| Diol 2 (#400)[*2] | 80 | – | 20 | – | – | – | – | treated |
| Diol 3 (#1000)[*3] | – | – | 80 | 50 | 80 | – | – | foam[*18)] |
| Diol 4 (#2000)[*4] | 20 | – | – | – | – | 80 | – | |
| Diol 5 (#3000)[*5] | – | 50 | – | – | – | – | 80 | |
| Diol 6 (#4000)[*6] | – | – | – | – | – | – | – | |
| Diol 7 (#1000)[*7] | – | – | – | – | – | – | – | |
| Diol 8 (#1000)[*8] | – | – | – | – | – | – | – | |
| Diol 9 (#5000)[*9] | – | 50 | – | 50 | – | – | – | |
| Triol (#3000)[*12] | – | – | – | – | – | – | – | |
| total average molecular weight of diol | 720 | 4500 | 880 | 3000 | 840 | 1640 | 2440 | |
| maximum of average molecular weight difference of diol | 1600 | 1000 | 600 | 4000 | 800 | 1800 | 2800 | |
| TDI (T-80) index[*13] | 105 | 105 | 105 | 105 | 105 | 105 | 105 | |
| water | 4.2 | 4.2 | 4.2 | 4.2 | 4.2 | 4.2 | 4.2 | |
| amine catalyst[*14] | 0.1 | 0.1 | 0.1 | 0.1 | 0.1 | 0.1 | 0.1 | |
| foam stabilizer[*15] | 1.0 | 1.0 | 1.0 | 1.0 | 1.0 | 1.0 | 1.0 | |
| tin catalyst[*16] | 0.2 | 0.8 | 0.5 | 0.3 | 0.2 | 0.2 | 0.2 | |
| air permeation[*17)] (cc/cm$^2$/sec) | – | 40 | – | 120 | – | – | – | 293 |
| number of cell[*17)] (number/inch) | – | 35 | – | 35 | – | – | – | 35 |

Notes:

*1 to 16: see notes at the bottom of Table 2.

*17 The mark "–" in this row shows that foam was not formed. The same mark in other parts shows that a component was not used or a number was not obtained.

*18 A foam obtained by heat-treatment of the foam prepared in Comparative Example 1 according to Japanese Patent Publication No. 1966-752.

(End of Table 1)

Table 2

| | Example 19 | Example 20 | Example 21 |
|---|---|---|---|
| Diol 1 (#200)[*1] | – | – | – |
| Diol 2 (#400)[*2] | – | – | – |
| Diol 3 (#1000)[*3] | 25 | 50 | 25 |
| Diol 10 (#1200)[*10] | 25 | – | 25 |
| Diol 11 (#1800)[*11] | – | 25 | 25 |
| Diol 4 (#2000)[*4] | 50 | 25 | 25 |
| Diol 5 (#3000)[*5] | – | – | – |
| total average molecular weight of diol | 1525 | 1475 | 1500 |
| maximum of average molecular weight difference of diol | 1000 | 1000 | 1000 |
| TDI (T-80) index[*13] | 105 | 105 | 105 |
| water | 4.2 | 4.2 | 4.2 |
| amine catalyst[*14] | 0.1 | 0.1 | 0.1 |
| foam stabilizer[*15] | 1.0 | 1.0 | 1.0 |
| tin catalyst[*16] | 0.2 | 0.2 | 0.2 |
| air permeation ($cc/cm^2/sec$) | 325 | 327 | 313 |
| number of cell (number/inch) | 35 | 35 | 35 |

Notes

*1  Diol 1 (#200):  Molecular weight = 200; PO/EO ratio = 100/0; functionality = 2; trade name, Sannix PP200; a product of San-yo Kasei Co., Ltd.

*2  Diol 2 (#400):  Molecular weight = 400; PO/EO ratio = 100/0; functionality = 2; trade name, Sannix PP400; a product of San-yo Kasei Co., Ltd.

*3  Diol 3(#1000):  Molecular weight = 1000; PO/EO ratio = 100/0; functionality = 2;

|      |                    | trade name, Sannix PP1000; a product of San-yo Kasei Co., Ltd. |
|------|--------------------|----------------------------------------------------------------|
| *4   | Diol 4 (#2000):    | Molecular weight = 2000; PO/EO ratio = 100/0; functionality = 2; trade name, Sannix PP2000; a product of San-yo Kasei Co., Ltd. |
| *5   | Diol 5 (#3000):    | Molecular weight = 3000; PO/EO ratio = 100/0; functionality = 2; trade name, Sannix PP3000; a product of San-yo Kasei Co., Ltd. |
| *6   | Diol 6 (#4000):    | Molecular weight = 4000; PO/EO ratio = 100/0; functionality = 2; trade name, Sannix PP4000; a product of San-yo Kasei Co., Ltd. |
| *7   | Diol 7 (#1000):    | Molecular weight = 1000; PO/EO ratio = 90/10; functionality = 2; an experimental product. |
| *8   | Diol 8 (#1000):    | Molecular weight = 1000; PO/EO ratio = 80/20; functionality = 2; an experimental product. |
| *9   | Diol 9 (#5000):    | Molecular weight = 5000; PO/EO ratio = 100/0; functionality = 2; an experimental product. |
| *10  | Diol 10 (#1200):   | Molecular weight = 1200; PO/EO ratio = 100/0; functionality = 2; an experimental product. |
| *11  | Diol 11 (#1800):   | Molecular weight = 1800; PO/EO ratio = 100/0; functionality = 2; an experimental product. |
| *12  | Triol 12 (#3000):  | Molecular weight = 3000; PO/EO ratio = 100/0; functionality = 3; trade name, Sannix GP3000; a product of San-yo Kasei Co., Ltd. |
| *13  | TDI (T-80):        | trade name, Sumidur T–80, a product of Sumitomo Bayer Urethane Co., Ltd. |
| *14  | amine catalyst:    | trade name, DABCO 33LV; a 33 % dipropylene glycol solution of triethylenediamine; a product of Sankyo Air Products Co., Ltd. |
| *15  | foam stabilizer:   | trade name, F242T; a product of Shin-etsu Kagaku Kogyo Co., Ltd. |
| *16  | tin catalyst:      | stannous octoate |

As shown in the results of Examples 1 and 2, it was made clear that, as using one single diol with a triol in a conventional formulation using triol alone, a polyurethane foam having air permeation of the same degree as that of a conventional foam treated by burning after preparation of the foam (Comparative Example 17), namely 200 cc/cm$^2$/sec or more, was formed when content of the single diol in the polyol component was 50 weight % or more. It was also made clear that formation of a foam was difficult when a single diol was used in an amount of 100 weight % (Comparative Examples 4 and 5) and that good foam could not be obtained when it was used in an amount of less than 50 weight % (Comparative Examples 1 to 3).

It was also made clear by comparison of the results of Examples 3 to 5 and that of Comparative Example 6 that, using two single diols with a triol in a conventional formulation using triol alone, a foam having high air permeation in the same manner as described above was formed when the total content of the single diols in the polyol component was more than 50 weight %.

Polyol components composed of 100 weight % of two single diols were used and foams obtained with various combinations of the single diols were compared. The results show that foams having high air permeability were provided in all the cases where the total average molecular weight of the two single diols was in the range of 1000 to 3000 (Examples 13 to 16). Foams having better air permeability were obtained when the total average molecular weight was in the range of 1000 to 2000 (Examples 3 to 6, 8 to 11 and 15). Foams having still better air permeability were obtained when the total average molecular weight was in the range of 1300 to 1700 (Examples 6, 8 to 10, 17 and 18).

As shown in Table 2, it was also made clear that good polyurethane foams were formed when two diols having average molecular weight difference of 400 or less were used for the single diol of the present invention (Examples 19 to 21).

The polyurethane foam having high air permeability of the object of the present invention could not be obtained in the case where the total average molecular weight of the two single diols described above was 1000 or less (Comparative Examples 10 and 12) or where it was more than 3000 (Comparative Examples 7 to 9 and 11) even when the polyol contained a single diol or a plurality of single diols and, moreover, the total content of the diols was 50 weight % or more.

Similarly, a foam having high air permeability could not be obtained in the cases where the maximum value of the average molecular weights of the individual diols used in the polyol component was 800 or less (Comparative Example 12) or more than 3600 (Comparative Examples 7, 8 and 13) even when the conditions described above were satisfied.

On the other hand, a foam having good air permeability could be obtained when the maximum value of the average molecular weights of individual diols mixed together was in the range of 800 to 3600. Furthermore, favorable results were obtained when the maximum value of the difference between them is in the range of 800 to 2000.

When a diol having an average molecular weight of 300 or less was contained in an amount of 15 weight % or more, the desired foam could not be obtained (Comparative Examples 7 and 14 to 16).

## Claims

1. A process for producing a flexible polyurethane foam comprising the step of using a polyether polyol, a polyisocyanate, a catalyst and a blowing agent which is characterized in that the polyether polyol contains 50 weight % to less than 100 weight % of a single diol in the polyol component or 50 weight % or more of a plurality of single diols in the polyol component.

2. A process for producing a flexible polyurethane foam as claimed in Claim 1, wherein, of the single diols contained in the polyether polyol, the two single diols having the largest contents are total amount of 50 weight % or more of the amount of the polyol component.

3. A process for producing a flexible polyurethane foam as claimed in Claims 1 or 2 wherein the polyether polyol contains a diol having a total average molecular weight of 1000 to 3000.

4. A process for producing a flexible polyurethane foam as claimed in Claims 1, 2 or 3 wherein the plurality of single diols have a total average molecular weight of 1000 to 3000.

5. A process for producing a flexible polyurethane foam as claimed in any of the preceding Claims, wherein the polyether polyol contains a plurality of single diols having an average molecular weight difference of 800 to 3600.

6. A process for producing a flexible polyurethane foam as claimed in any of the preceding Claims, wherein, of the plurality of single diols contained in the polyether polyol, the two single diols having the largest contents have an average molecular weight difference of 800 to 3600.

7. A process for producing a flexible polyurethane foam as claimed in Claim 6, wherein, of the plurality of single diols contained in the polyether polyol, the two single diols having the largest contents have a total average molecular weight of 1000 to 3000.

8. A process for producing a flexible polyurethane foam as claimed in any of the preceding claims, wherein the polyether polyol contains a polyol having a molecular weight of less than 300 in an amount of 15 weight % or less.

9. Flexible polyurethane foam obtainable by a process as defined in any one of the preceding claims.